# EUROPÄISCHE PATENTSCHRIFT

(11) **EP 2 069 719 B1**
(45) Veröffentlichungstag und Bekanntmachung des Hinweises auf die Patenterteilung: **20.07.2011**
(21) Anmeldenummer: 07788224.9
(22) Anmeldetag: 03.08.2007
(51) Int. Cl.: G01C 21/36, G06F 3/048

(54) **ANZEIGEVORRICHTUNG ZUR ANZEIGE EINER REISEROUTE**
DISPLAY APPARATUS FOR DISPLAYING A TRAVEL ROUTE
DISPOSITIF D'AFFICHAGE POUR AFFICHER UN ITINÉRAIRE DE VOYAGE

(30) Priorität: 21.09.2006 DE 102006044438
(43) Veröffentlichungstag der Anmeldung: 17.06.2009
(73) Patentinhaber: Robert Bosch GmbH, 70442 Stuttgart (DE)
(72) Erfinder: MUELLER, Guido, 06484 Quedlinburg (DE)
(86) Internationale Anmeldenummer: PCT/EP2007/058093
(87) Internationale Veröffentlichungsnummer: WO 2008/034673

(56) Entgegenhaltungen:
- WO-A-03/050420
- DE-A1- 10 105 394

## Beschreibung

### TECHNISCHER HINTERGRUND

Die vorliegende Erfindung betrifft eine Anzeigevorrichtung zur Anzeige einer Reiseroute, ein Navigationssystem zum Navigieren entlang einer Reiseroute mit einer solchen Anzeigevorrichtung, sowie ein Verfahren zur Anzeige einer Reiseroute.

Fahrzeugnavigationssysteme oder auch Routenberechnungsprogramme ermitteln je nach Berechnungskriterium zwischen Start und Ziel einer Reise die optimale Route auf den entsprechenden Verkehrswegen. Das Ergebnis, also die Route, wird in einer Karte durch die Markierung der zu nutzenden Verkehrswegeabschnitte visuell gekennzeichnet. Eine andere Möglichkeit besteht in der Anzeige einer Liste mit den Bezeichnungen der zu benutzenden Verkehrswegeabschnitte, einer so genannten Routeninformationsliste. Dabei ist es wünschenswert, dem Nutzer die Route in kompakter und verständlicher Form zu präsentieren und bei Bedarf die entsprechenden Details anzuzeigen. Ferner bietet eine Routeninfonnationsliste die Möglichkeit, Zusatzinformationen zu präsentieren, die sonst nicht oder nur schwierig zu vermitteln sind.

In verschiedenen Systemen, wie z.B. in Blaupunkt-Navigationssystemen der DX- oder EX-Serie, werden ausschließlich Straßennamen und -nummern als Bezeichnung verwendet. Dabei werden die Verkehrswegeabschnitte mit der gleichen vollständigen Bezeichnung zu einem Eintrag in der Liste zusammengefasst. In entlegenen Gegenden fällt es dem Nutzer jedoch schwer, sich allein an Straßenbezeichnungen zu orientieren.

In anderen Systemen werden neben den Bezeichnungen der Verkehrswegeabschnitte selbst auch die zugehörigen politischen Gebiete, z.B. Orts- oder Gemeindenamen, aufgeführt, wodurch die Verständlichkeit verbessert wird. Um dabei zusätzliche Redundanzen zu vermeiden, werden die Verkehrswegeabschnitte innerhalb eines Gebiets durch die Unterordnung entsprechend zugeordnet. Durch die zusätzlichen Gebietsbezeichnungen wird zwar die Verständlichkeit verbessert, durch die erhöhte Informationsfülle nimmt die Übersichtlichkeit aber deutlich ab. Durch das Ausblenden der für den Überblick unbedeutenden Verkehrswege innerhalb von bezeichneten Gebieten kann die Übersichtlichkeit etwas verbessert werden, ohne dabei nennenswert auf für den ersten Blick wenig hilfreiche Informationen zu verzichten. Ausgehend von der Limitierung der Zeilenanzahl in der Anzeige von typischen Fahrerinformationssystemen auf 6 bis 10 Zeilen wird deutlich, dass die Routenbeschreibung trotz der Zusammenfassung durch eine derartige Textliste kaum praktikabel ist.

Die WO 03/050420 offenbart eine Anzeigevorrichtung zum Anzeigen einer Reiseroute, die eine Kette von einander anschließenden Routenelementen umfasst, wobei jedes Routenelement Attribute aufweist, die drei Hierarchieebenen einer vorgegebenen Folge von Hierarchieebenen fest zugeordnet sind. Zur Anzeige der Reiseroute in hierarchischer Darstellung werden Teilketten maximaler Länge zusammengefasst, die jeweils gleiche Attribute in einer gegebenen Hierarchieebene und allen darüberliegenden Hierarchieebenen aufweisen.

Vor diesem Hintergrund besteht der Bedarf, dem Nutzer in der Routeninformationsliste eine sehr kompakte und verständliche Anzeige des Routenverlaufs zu präsentieren und dabei die Möglichkeit zu bieten, die kompakt zusammengefassten Informationen auf Wunsch zu verfeinern.

### OFFENBARUNG DER ERFINDUNG

Gemäß der vorliegenden Erfindung wird eine Anzeigevorrichtung zur Anzeige einer Reiseroute gemäβ Anspruch 1 bereitgestellt .

Die erfindungsgemäße Anzeigevorrichtung erlaubt es, die Reiseroute in einer besonders kompakten und verständlichen Form anzuzeigen, da sie unter einer Fülle von Attributen, die jeweils verschiedene, sich gegenseitig überlappende Abschnitte der Reiseroute betreffen, relevante von weniger relevanten Informationen trennt und den Verlauf der Route unabhängig von deren Länge in einer durch einen Betrachter rasch und intuitiv zu erfassenden Weise darstellt.

Gemäß einer Ausführungsform der Erfindung ist der Maßwert eines Routenelements eine Funktion einer Wegstrecke und einer Reisezeit des Routenelements. Diese Ausführungsform ist zum einen besonders vorteilhaft, da bekannte Routenplanungs- und Navigationssysteme sowohl Wegstrecke als auch Reisezeit für jedes Routenelement einer geplanten Route bereitstellen, so dass die Anzeigevorrichtung der vorliegenden Ausführungsform mit dem Datenformat dieser Systeme kompatibel ist.

Zum Anderen wird bei dieser Ausführungsform die Relevanz von Attributen anhand von Kriterien gemessen, die für einen Nutzer, der die Reiseroute plant oder sie bereist, intuitiv einsichtig sind, so dass der Nutzer die angezeigte Route besonders sehnell und mühelos erfasst. Beispielsweise wird ein Nutzer den Namen eines Gebiets, das auf einer längeren Wegstrecke durchquert wird, als relevanter empfinden als die Bezeichnung einer Straße, die nur auf einem kurzen Teilstück der Route befahren wird. Auch wird er den Namen einer Stadt, deren Durchquerung eine längere Zeit in Anspruch nimmt, als wichtiger einschätzen, als die Bezeichnung einer auf einer Durchgangsstraße schnell durchfahrenen Ortschaft.

Vorzugsweise ist der Maßwert die Wegstrecke selbst, da die Reisezeit auf dem Nutzer unbekannten oder als unbedeutend empfundenen Straßen unverhältnismäßig hoch sein kann, während für die Wegstrecke eine solche Einschränkung nicht gilt

Gemäß einer Ausführungsform der Erfindung ist der Gesamtmaßwert einer Teilkette die Summe der Maßwerte der Routenelemente der Teilkette. Dies ist besonders vorteilhaft, da so die Relevanz von aus mehreren Routenelementen zusammengesetzten Routenabschnitten in einer für den Nutzer intuitiv nachvollziehbaren Weise beurteilt wird. Beispielsweise entspricht für den Fall, dass als Maßwert die Wegstrecke verwendet wird, der Gesamtmaßwert genau der gesamten Wegstrecke des aus den Routenelementen zusammengesetzten Streckenabschnitts.

Gemäß einer Ausführungsform der Erfindung umfasst die Menge von Attributen Sonderattribute. Die Anzeigeeinrichtung weist ferner eine Sondervorzieheinheit auf, die Sonderattribute in der Folge von Hierarchieebenen vorzieht. Diese Ausführungsform ist besonders vorteilhaft, weil sie es erlaubt, eventuell vorhandene Klassifikationen der Attribute nutzbar zu machen, um besonders relevante Informationen hervorzuheben.

Gemäß einer Ausführungsform der Erfindung umfasst die Menge von Attributen ortsbezogene Attribute und streckenbezogene Attribute. Die Anzeigevorrichtung weist dabei eine Ortsvorzieheinheit auf, die ein ortsbezogenes Attribut in der Folge von Hierarchieebenen vor ein streckenbezogenes Attribut zieht, wenn die Teilkette des streckenbezogenen Attributs ein erstes oder letztes Routenelement hat, das zugleich Routenelement der Teilkette des ortsbezogenen Attributs ist.

Bei dieser Ausführungsform wird zum Beispiel die Bezeichnung eines Verkehrswegs, der entlang der Route aus einem Ort heraus oder in einen Ort hineinführt, ab der Ortsgrenze der Bezeichnung des Ortes nachgeordnet. Dies hat den Vorteil, dass die objektiv nachgeordnete Rolle des Verkehrswegs, den Ort anzubinden, in der Anzeigchierarchie reflektiert wird, so dass der Nutzer die angezeigte Route intuitiv besonders schnell und effizient erfasst.

Gemäß einer Ausführungsform fasst die Anzeigeeinheit innerhalb einer Hierarchieebene übereinstimmende Attribute benachbarter Routenelemente in einem Eintrag zusammen. Die Anzeigeeinheit umfasst ein Bedienelement, das dem Eintrag nachgeordnete Attribute der nächst niedrigeren Hierarchieebene wahlweise sichtbar macht. Dies ermöglicht es, durch Unsichtbarmachen unterer Hierarchieebenen die Route unabhängig von ihrer Länge in einer kompakten Form darzustellen, was die Ausführungsform besonders geeignet für kompakte Navigationsgeräte mit kleinen Bildschirmen macht.

Gemäß einer Ausrührungsform macht das Bedienelement nachgeordnete Attribute eines ortsbezogenen Eintrags in Form einer Baumstruktur sichtbar. Ebenfalls gemäß einer Ausführungsform macht das Bedienelement nachgeordnete Attribute eines streckenbezogenen Eintrags sichtbar durch Ersetzen des Eintrags mit einer Liste von Verkettungen des im Eintrag zusammengefassten streckenbezogenen Attributs mit jeweils einem Eintrag der nächst niedrigeren Hierarchieebene. Der Vorteil dieser Strukturen ist, dass sie die räumliche Anordnung der realen Welt abbilden und dadurch leicht zu erfassen sind: Ein größerer Ort entspricht nämlich einem räumlich ausgedehnten Gebiet, innerhalb dessen Verkehrswege und kleinere Orte liegen, wogegen einem streckenbezogenen Attribut nachgeordnete Attribute weitere Informationen zu demselben Verkehrsweg darstellen.

Unter einem weiteren Gesichtspunkt der vorliegenden Erfindung wird ein Navigationssystem zum Navigieren entlang einer Reiseroute bereitgestellt, mit einer Anzeigevorrichtung zur Anzeige der Reiseroute nach einem der Ansprüche 1-7. Ein solches Navigationssystem zeichnet sich dadurch aus, dass es dem reisenden, insbesondere ein Fahrzeug führenden, Nutzer die benötigten Informationen mit besonders hoher Effizienz bereitstellt, so dass er entlang der Route schneller navigieren und dem Verkehr und der Umgebung mehr Aufmerksamkeit widmen kann.

Ferner wird unter einem weiteren Gesichtspunkt der Erfindung ein Verfahren zum Anzeigen einer Reiseroute gemäβ Anspruch 9 beseitgestellt.

### ZUSAMMENFASSUNG DER FIGUREN

- Fig. 1: ist eine schematische Darstellung eines Beispiels einer Reiseroute,
- Fig. 2: ist eine schematische Darstellung einer Ausführungsform einer Anzeigevorrichtung gemäß der vorliegenden Erfindung,
- Fig. 3: ist eine schematische Darstellung einer Ausführungsform eines Navigationssystems gemäß der vorliegenden Erfindung,
- Fig. 4: ist ein Beispiel einer mittels der Anzeigevorrichtung der vorliegenden Erfindung angezeigten Route,
- Fig. 5: ist ein Ablaufdiagramm eines Verfahrens zum Anzeigen einer Reiseroute gemäß der vorliegenden Erfindung.

### AUSFÜHRLICHE BESCHREIBUNG DER AUSFÜHRUNGSBEISPIELE

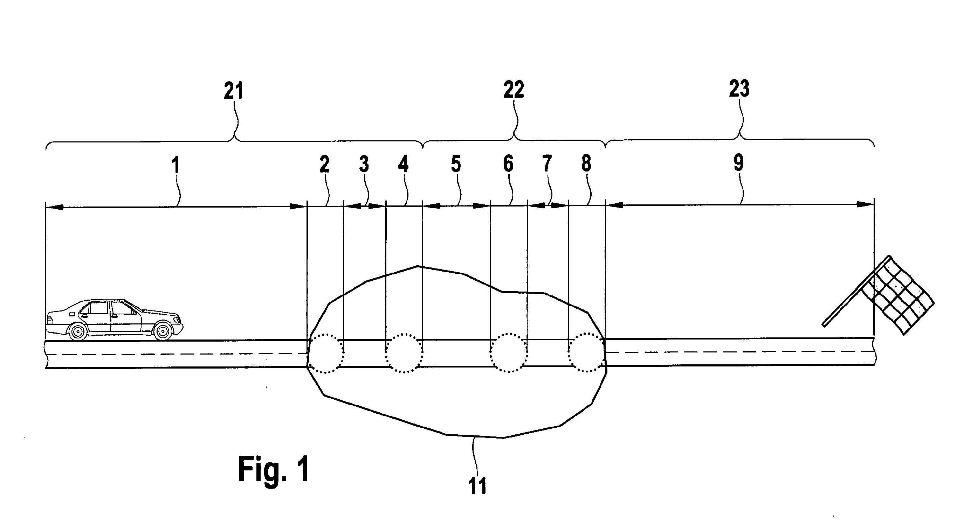

Figur 1 zeigt beispielhaft, in der Art einer stilisierten Landkarte, eine schematische Darstellung einer Reiseroute, wie sie von bekannten Navigations- oder Routenplanungssystemen ermittelt wird. Die Route verbindet einen Ausgangspunkt, hier mit einem Fahrzeug markiert, und einen Zielpunkt, hier markiert durch ein Flaggensymbol. Sie besteht aus einer Anzahl von Routenelementen 1-9, die in festgelegter Reihenfolge aneinander anschließend eine Kette bilden, wobei das erste Routenelement 1 am Ausgangspunkt der Reise beginnt, und das letzte Routenelement 9 am Zielpunkt der Reise endet. Beispiele für Routenelemente sind sowohl Abschnitte 1, 3, 5, 7, 9 von Verkehrswegen wie Straßen, Schienenwege oder Fährstrecken, als auch Verkehrsknoten 2, 4, 6, 8 wie Kreuzungen, Bahnhöfe oder Häfen. Jedem Routenelement ist dabei jeweils ein Teil einer Wegstrecke der gesamten Reiseroute zugeordnet, wobei die Wegstrecke im Falle von Verkehrsknoten den Wert Null hat. Eine für das Reisen entlang eines bestimmten Routenelements notwendige Reisezeit hat dagegen auch im Falle von Verkehrsknoten nicht notwendigerweise den Wert Null, da z.B. Wartezeiten an Verkehrsampeln oder Bahnhöfen zur gesamten Reisezeit der Route beitragen.

Jedes Routenelement einer solchen Reiseroute kann ein oder mehrere Attribute aufweisen, die es auf verschiedene Art bezeichnen, beschreiben oder für das Routenelement relevante Zusatzinformationen enthalten. Beispielsweise kann eine Straße mit einer oder mehreren Straßennummern oder Straßennamen bezeichnet sein, die für einen durch das Routenelement dargestellten Abschnitt der Straße gültig sind.

Die Elemente der in Fig. 1 dargestellten Route sind zum besseren Verständnis mit ihrer jeweiligen Wegstrecke, Reisezeit und Attributen in Tabelle 1 zusammengefasst:

**Tab. 1: Ausgangsdaten eines beispielhaften Routenverlaufs**

| Routenelement | Wegstrecke | Reisezeit | Ortsname | Straßennummer | Straßenname | Kreuzungsbezeichnung |
|---|---|---|---|---|---|---|
| 1 | 1000 m | 10:00 | - | 21 | - | - |
| 2 | 0 m | 00:00 | 11 | 21 | - | 41 |
| 3 | 250 m | 10:00 | 11 | 21 | - | - |
| 4 | 0 m | 00:15 | 11 | 21 | - | - |
| 5 | 500 m | 20:00 | 11 | 22 | 31 | - |
| 6 | 0 m | 00:05 | 11 | 22 | 31 | 42 |
| 7 | 250 m | 15:00 | 11 | 22 | 32 | - |
| 8 | 0 m | 00:00 | 11 | 22 | 32 | - |
| 9 | 1000 m | 12:00 | - | 23 | - | - |

Die Attribute der Routenelemente sind in Tabelle 1 symbolisch durch Bezugszeichen 11-42 dargestellt und ihrem Bedeutungsinhalt entsprechend in Kategorien "Ortsname", ,,Straßennummer", "Straßenname" und "Kreuzungsbezeichnung" eingeordnet. Dabei sind nicht für jedes Routenelement Attribute in jeder Kategorie vorhanden.

Wie in Fig. 1 gezeigt, führt die beispielhaft betrachtete Route ab dem Routenelement 2 bis einschließlich zum Routenelement 8 durch ein Gebiet 11, das eine Ortschaft darstellt. Dementsprechend ist in Tabelle 1 den Routenelementen 2-8 jeweils ein Ortsname des Gebiets 11 zugeordnet, z.B. der Ortsname "Hildesheim". Ebenfalls in Fig. 1 markiert ist eine Nummer einer Straße 21, die für die Routenelemente 1-4 gültig ist, z.B. die Nummer einer Bundesstraße "B21". Da das Routenelement 1 außerhalb, die Routenelemente 2-3 aber innerhalb des Gebiets 11 liegen, folgt die Route der Straße 21 bis ins Innere des Gebiets 11. Für die folgenden Routenelemente 5-8 bis zur Grenze des Gebiets 11 ist eine weitere Straßennummer 22 gültig, und nach dem Verlassen des Gebiets 11 für das letzte Routenelement 9 eine dritte Straßennummer 23.

Entlang der Routenelemente 5-6 trägt die Straße 22 zusätzlich zu ihrer Straßennummer einen Straßennamen 31, z.B. "Beethovenstraße", und entlang der Routenelemente 7-8 einen weiteren Straßennamen 32. Die Kreuzungen entsprechenden Routenelemente 2 und 6 sind wiederum mit besonderen Kreuzungsbezeichnungen versehen, die beispielsweise Nummern oder auch Namen sein können.

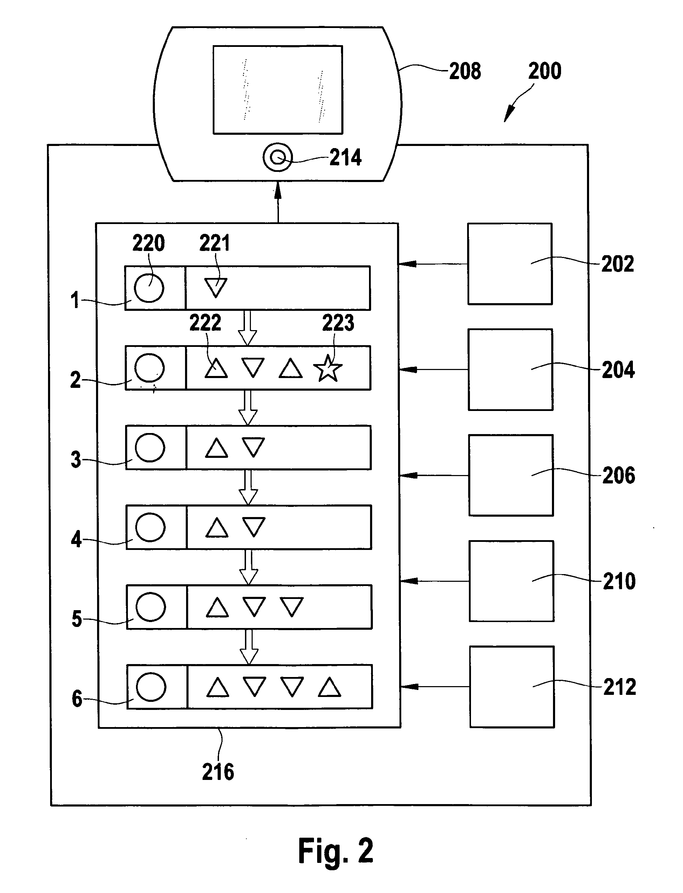

Figur 2 zeigt in schematischer Darstellung eine Ausführungsform einer erfindungsgemäßen Anzeigevorrichtung 200 zur Anzeige einer Reiseroute, wie z.B. der in Fig. 1 gezeigten Route. Die Anzeigeeinrichtung umfasst eine Anzeigeeinheit 208 mit einem Bildschirm, auf dem im Betrieb die anzuzeigende Route erscheint, und einem Bedienelement 214, mit dem ein Benutzer die Anzeige der Reiseroute interaktiv beeinflussen kann.

Vorzugsweise umfasst die Anzeigevorrichtung einen Speicher 216 zum Speichern einer Datenstruktur, die die anzuzeigende Reiseroute als Kette von, hier beispielhaft gezeigten, Routenelementen 1-6 repräsentiert. Die Anzahl der Routenelemente der Kette hängt dabei von der anzuzeigenden Reiseroute ab, so dass der Speicher 216 zweckmäßigerweise so groß gewählt wird, dass auch längere Reiserouten gespeichert werden können.

Jedes der beispielhaft gezeigten Routenelemente 1-6 weist einen Maßwert 220 auf, der ein Maß für den Anteil des jeweiligen Routenelements an der gesamten Route ist. Als Maßwert können beispielsweise die Wegstrecke, die Reisezeit, der Energieverbrauch oder die Transportkosten, oder eine von einem oder mehreren dieser Werte abgeleitete Funktion dienen. Ferner weist jedes Routenelement eine Menge von Attributen 221-223 auf, die als streckenbezogene Attribute 221 wie Straßennamen oder -nummern, als ortsbezogene Attribute 222 wie Kreuzungsbezeichnungen, Orts- und Gebietsnamen, oder als Sonderattribute 223 mit besonderer Wichtigkeit wie z.B. dynamische Verkehrsinformationen kategorisiert sind.

Die Anzeigeeinrichtung umfasst eine Reihe von Operationseinheiten 202, 204, 206, 210, 212, die auf der in dem Speicher 216 abgelegten Kette von Routenelementen Operationen durchführen, um sie in eine zur Anzeige mit der Anzeigeeinheit 208 geeignete Form zu bringen. Diese Operationseinheiten können z.B. als durch einen Mikroprozessor ausgeführte Programmmodule, oder als Hardwaremodule implementiert sein. Die Operationseinheiten umfassen einen Teilkettenermittler 202 zum Ermitteln von Teilketten der Kette von Routenelementen 1-6, eine Berechnungseinheit 204 und einen Sortierer 206, weiterhin bevorzugterweise eine Ortsvorzieheinheit 212 und eine Sondervorzieheinheit 210, deren Funktionsweise im Folgenden am Beispiel der in Tabelle 1 aufgelisteten Daten der Reiseroute aus Fig. 1 näher beschrieben wird.

Im Betrieb erhält die Anzeigevorrichtung 200 z.B. von einem externen Routenplanungssystem eine Datenstruktur, die eine Kette von Routenelementen 1-9 einer Reiseroute repräsentiert. Zur weiteren Verarbeitung wird diese Datenstruktur in Speicher 216 abgespeichert. Alternativ kann der Speicher 216 Bestandteil des Routenplanungssystems, das die Route ermittelt hat, sein, so dass eine separate Speicherung durch die Anzeigevorrichtung 200 entfällt.

Der Teilkettenermittler 202 ermittelt sodann für jedes Attribut mindestens eines Routenelements, eine zusammenhängende, das Routenelement einschließenden Teilkette maximaler Länge von Routenelementen, die ein identisches Attribut aufweisen. Beispielsweise beginnt der Teilkettenermittler 202 bei dem ersten Routenelement 1, das nach Tabelle 1 als Attribut die Straßennummer 21 aufweist. Der Teilkettenermittler prüft nun, ob das benachbarte Routenelement 2 ebenfalls die Straßennummer 21 als Attribut aufweist. Da dies nach Tabelle 1 der Fall ist, prüft der Teilkettenermittler ebenso für das dem Routenelement 2 benachbarte Routenelement 3 nach, ob es die Straßennummer 21 als Attribut aufweist, und so fort für die folgenden Routenelemente. Bei der Überprüfung der Attribute des Routenelements 5 stellt der Teilkettenermittler die Straßennummer 21 nicht mehr fest, und stellt als Ergebnis die ermittelte zusammenhängende Teilkette der Routenelemente 1-4 bereit, die alle das identische Attribut der Straßennummer 21 aufweisen.

Der Teilkettenermittler 202 wiederholt die beschriebene Operation beispielsweise als nächstes für die noch nicht berücksichtigten Attribute des Routenelements 2 und ermittelt so eine weitere zusammenhängende Teilkette der Routenelemente 2-8, die alle das identische Attribut des Ortsnamens 11 aufweisen. Eine dritte Teilkette enthält das Routenelement 2 als einziges Routenelement, da dieses im Unterschied zu seinen beiden Nachbarelementen 1 und 3 die Kreuzungsbezeichnung 41 als Attribut aufweist. Auf diese Weise ordnet der Teilkettenermittler 202 jedem Attribut der Routenelemente genau eine zusammenhängende Teilkette von Routenelementen zu.

Nach Abschluss der Operation des Teilkettenermittlers 202 berechnet die Berechnungseinheit 204 für jede ermittelte Teilkette einen Gesamtmaßwert aus den Maßwerten der Routenelemente der Teilkette. Im Folgenden wird beispielhaft die Wegstrecke als Maßwert der jeweiligen Routenelemente 1-9 verwendet. Die Berechnungseinheit 204 beginnt z.B. mit der durch den Teilkettenermittler 202 ermittelten, zusammenhängende Teilkette der Routenelemente 1-4, die alle das identische Attribut der Straßennummer 21 aufweisen, und summiert die Wegstrecken der Routenelemente 1-4. Da das Routenelement 1 eine Wegstrecke von 1000 m, das Routenelement 3 eine Wegstrecke von 250 m und die Routenelemente 2 und 4 eine Wegstrecke von 0 m aufweisen, ergibt sich ein Gesamtmaßwert von 1250 m für diese Teilkette.

Entsprechende Berechnungen eines Gesamtmaßwerts führt die Berechnungseinheit 204 für die übrigen Teilketten aus. Das Ergebnis anhand der Beispielroute ist in Tabelle 2 zusammengefasst. Hierbei wurde zum besseren Verständnis der folgenden Operationen für jede Teilkette der Gesamtmaßwert der Teilkette in Klammern hinter jedes Attribut dieser Teilkette gesetzt.

**Tab. 2: Gesamtmaßwerte der Teilketten für den beispielhaften Routenverlauf**

| Routenelement | Wegstrecke | Ortsname | Straßennummer | Straßenname | Kreuzungsbezeichnung |
|---|---|---|---|---|---|
| 1 | 1000 m | - | 21 (1250 m) | - | - |
| 2 | 0 m | 11 (1000 m) | 21 (1250 m) | - | 41 (0 m) |
| 3 | 250 m | 11 (1000 m) | 21 (1250 m) | - | - |
| 4 | 0 m | 11 (1000 m) | 21 (1250 m) | - | - |
| 5 | 500 m | 11 (1000 m) | 22 (750 m) | 31 (500 m) | - |
| 6 | 0 m | 11 (1000 m) | 22 (750 m) | 31 (500 m) | 42 (0 m) |
| 7 | 250 m | 11 (1000 m) | 22 (750 m) | 32 (250 m) | - |
| 8 | 0 m | 11 (1000 m) | 22 (750 m) | 32 (250 m) | - |
| 9 | 1000 m | - | 23 (1000 m) | - | - |

Nachdem der Teilkettenermittler 202 jedem Attribut der Routenelemente eine Teilkette, und die Berechnungseinheit 204 jeder Teilkette einen Gesamtmaßwert zugeordnet hat, ist damit jedem Attribut mittelbar der Gesamtmaßwert seiner zugehörigen Teilkette zugeordnet. Dieser Wert ist die in Tabelle 2 hinter den jeweiligen Attributen in Klammern notierte Wegstrecke.

Der Sortierer 206 sortiert nun jeweils für eines der Routenelemente 1-9 die Menge von Attributen dieses Routenelements nach einer Größenrelation der Gesamtmaßwerte der Teilketten der Attribute in eine Folge von Hierarchieebenen. Bezogen auf die Darstellung in Tabelle 2 bedeutet dies, dass die in derselben Zeile stehenden Attribute jeweils nach dem in Klammern hinter ihnen notierten Gesamtmaßwert sortiert werden. Beispielsweise beginnt der Sortierer 206 bei dem ersten Routenelement 1 der Route. Dieses Routenelement 1 weist als einziges Attribut die Straßennummer 21 auf, das durch den Sortierer 206 einer ersten, obersten Hierarchieebene der Folge von Hierarchieebenen zugewiesen wird. Das Routenelement 2 weist nach Tabelle 2 drei Attribute mit unterschiedlichen Gesamtmaßwerten der zugehörigen Teilketten auf. Der Sortierer ermittelt unter diesen die Straßehnummer 21 als Attribut mit dem größten Gesamtmaßwert von 1250 m und weist daher der Straßennummer 21 die erste Hierarchieebene zu. Der Ortsname 11 hat den zweitgrößten Gesamtmaßwert von 1000 m und wird folglich in die zweite Hierarchieebene sortiert. Die Kreuzungsbezeichnung 41 mit dem kleinsten Gesamtmaßwert von 0 m wird in die dritte Hierarchieebene sortiert. Die im Ergebnis der Operation des Sortierers 206 auf alle Routenelemente 1-9 jeweils in die Folge von Hierarchieebenen sortierten Attribute sind für die Beispielroute in Tabelle 3 zusammengefasst.

**Tab. 3: Nach Gesamtmaßwert sortierte Attribute der Routenelemente**

| Routenelement | 1. Hierarchieebene | 2. Hierarchieebene | 3. Hierarchieebene | 4. Hierarchieebene |
|---|---|---|---|---|
| 1 | 21 (1250 m) | - | - | - |
| 2 | 21 (1250 m) | 11 (1000 m) | 41 (0 m) | - |
| 3 | 21 (1250 m) | 11 (1000 m) | - | - |
| 4 | 21 (1250 m) | 11 (1000 m) | - | - |
| 5 | 11 (1000 m) | 22 (750 m) | 31 (500 m) | - |
| 6 | 11 (1000 m) | 22 (750 m) | 31 (500 m) | 42 (0 m) |
| 7 | 11 (1000 m) | 22 (750 m) | 32 (250 m) | - |
| 8 | 11 (1000 m) | 22 (750 m) | 32 (250 m) | - |
| 9 | 23 (1000 m) | - | - | - |

Auf diese Weise sind die Attribute bereits in eine zur Anzeige in hierarchischer Darstellung durch die Anzeigeeinheit 208 geeignete Form gebracht worden. An dieser Stelle kann die Sondervorzieheinheit 210 eine Korrektur der Sortierung der Attribute vornehmen, um Attributen, die aufgrund einer vorbekannten Klassifikation als besonders wichtig eingestuft sind, eine höhere Hierarchieebene zuzuweisen. Weitere Korrekturen der Sortierung werden durch die Ortsvorzieheinheit 212 vorgenommen, was sowohl vor als auch nach eventuellen Korrekturen durch die Sondervorzieheinheit 210 geschehen kann.

Im Betrieb zieht die Ortsvorzieheinheit 212 zur Korrektur der Sortierung ein ortsbezogenes Attribut in der Folge von Hierarchieebenen vor ein streckenbezogenes Attribut, wenn die Teilkette des streckenbezogenen Attributs ein erstes oder letztes Routenelement hat, das zugleich Routenelement der Teilkette des ortsbezogenen Attributs ist. Beispielsweise steht für das Routenelement 2 der Ortsname 11, der ein ortsbezogenes Attribut ist, in der zweiten Hierarchieebene hinter der Straßennummer 21, die ein streckenbezogenes Attribut ist. Die Ortsvorzieheinheit 212 prüft nun für das erste und letzte Routenelement der Teilkette der Straßennummer 21, also die Routenelemente 1 und 4, ob diese ebenfalls Routenelemente der Teilkette des Ortnamens 11 sind. Die Ortsvorzieheinheit 212 stellt fest, dass dies für das Routenelement 4 der Fall ist, und zieht daher für das betrachtete Routenelement 2 den Ortsnamen 11 vor die Straßennummer 21, so dass diese in der Folge von Hierarchieebenen die Plätze tauschen. In analoger Weise zieht die Ortsvorzieheinheit 212 für die Routenelemente 3 und 4 ebenfalls den Ortsnamen 11 vor die Straßennummer 21.

Weitere ortsbezogene Attribute der Beispielroute sind die Kreuzungsbezeichnungen 41 und 42. Für das Routenelement 2 steht die Kreuzungsbezeichnung 41 in der Hierarchie hinter der Straßennummer 21. Die Ortsvorzieheinheit prüft für das erste und letzte Routenelement der Teilkette der Straßennummer 21, also die Routenelemente 1 und 4, ob diese ebenfalls Routenelemente der Teilkette der Kreuzungsbezeichnung 41 sind. Da dies nicht der Fall ist, bleibt die Sortierung hier unverändert. Für das Routenelement 6 steht die Kreuzungsbezeichnung 42 in der Hierarchie hinter dem Straßennamen 31. Die Ortsvorzieheinheit prüft für das erste und letzte Routenelement der Teilkette des Straßennamens, also die Routenelemente 5 und 6, ob diese ebenfalls Routenelemente der Teilkette der Kreuzungsbezeichnung 42 sind. Da dies für das Routenelement 6 der Fall ist, tauschen hier der Straßenname 31 und die Kreuzungsbezeichnung 42 die Plätze. Ein weiteres Vorziehen der Kreuzungsbezeichnung 42 erfolgt nicht, da weder das erste noch das letzte Routenelement der Teilkette der Straßennummer 22 ein Routenelement der Teilkette der Kreuzungsbezeichnung 42 sind.

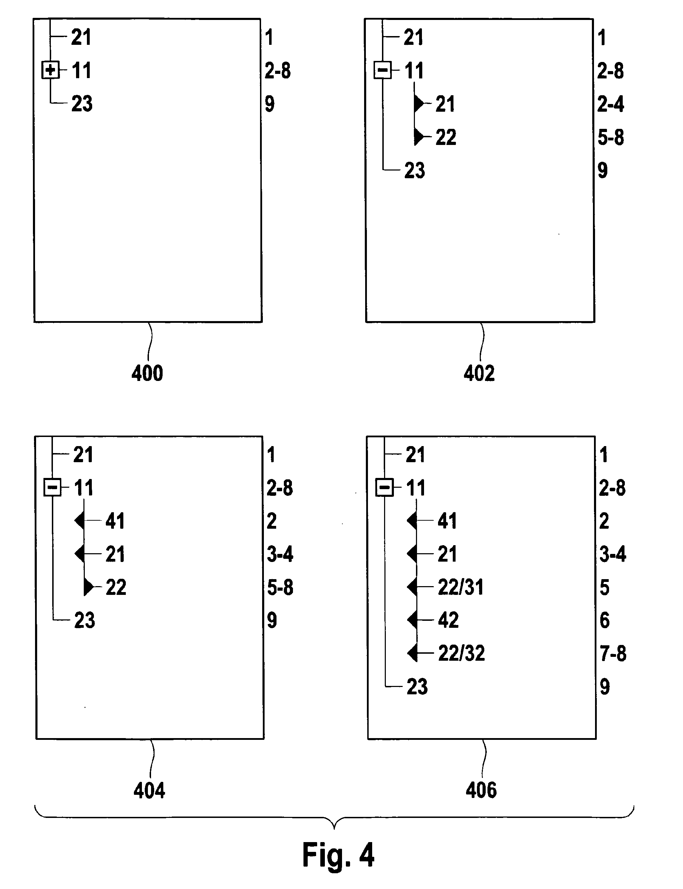

Die endgültige, durch die Ortsvorzieheinheit 212 korrigierte Sortierung der Attribute der Beispielroute in die Folge von Hierarchieebenen ist in Tabelle 4 dargestellt. Die Attribute der Routenelemente 1-9 werden, wie in der Beschreibung zu Fig. 4 näher ausgeführt, durch die Anzeigeeinheit 208 in hierarchischer Darstellung entsprechend ihrer in Tabelle 4 gezeigten Verteilung auf die Hierarchieebenen anzeigt.

**Tab. 4: Durch die Ortsvorzieheinheit korrigierte Sortierung der Attribute**

| Routenelement | 1. Hierarchieebene | 2. Hierarchieebene | 3. Hierarchieebene | 4. Hierarchieebene |
|---|---|---|---|---|
| 1 | 21 (1250 m) | - | - | - |
| 2 | 11 (1000 m) | 21 (1250 m) | 41 (0 m) | - |
| 3 | 11 (1000 m) | 21 (1250 m) | - | - |
| 4 | 11 (1000 m) | 21 (1250 m) | - | - |
| 5 | 11 (1000 m) | 22 (750 m) | 31 (500 m) | - |
| 6 | 11 (1000 m) | 22 (750 m) | 42 (0 m) | 31 (500 m) |
| 7 | 11 (1000 m) | 22 (750 m) | 32 (250 m) | - |
| 8 | 11 (1000 m) | 22 (750 m) | 32 (250 m) | - |
| 9 | 23 (1000 m) | - | - | - |

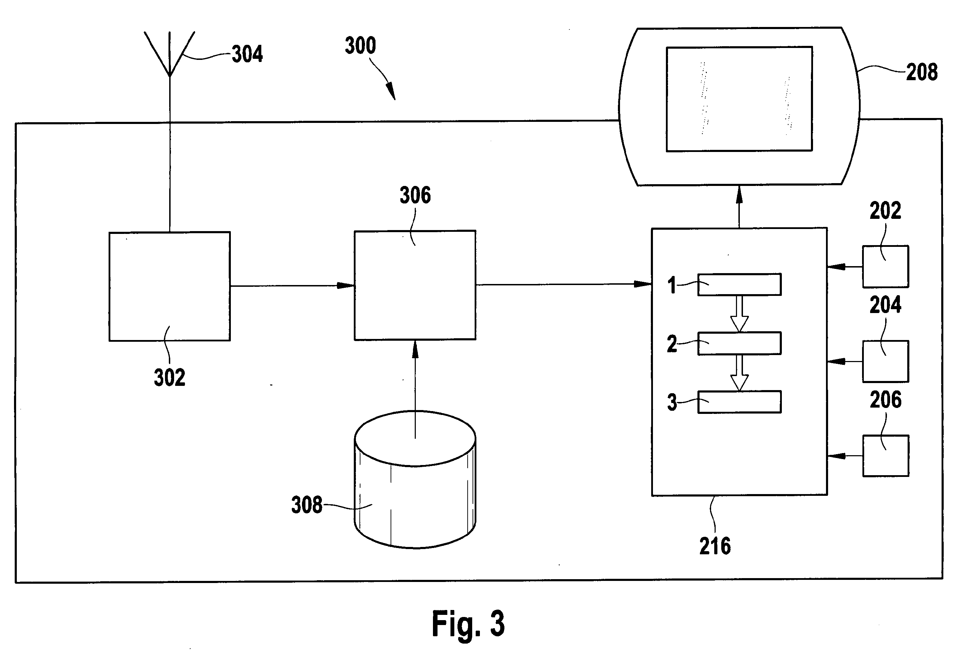

Figur 3 zeigt in schematischer Darstellung einer Ausführungsform eines Navigationssystems 300 gemäß der vorliegenden Erfindung. Das Navigationssystem 300 weist eine Navigationseinheit 302 auf, die mittels einer Antenne 304 Funksignale empfängt und aus diesen eine geografische Position ermittelt. Eine Routenplanungseinheit 306 plant unter Verwendung von Daten aus einer kartografischen Datenbank 308 eine Route von der gegenwärtigen geografischen Position zu einem vorgegebenen Zielpunkt und speichert diese als eine Kette von Routenelementen 1, 2, 3 in Speicher 216 ab, wobei jedes Routenelement einen Maßwert und eine Menge von Attributen aufweist, die beispielsweise der Datenbank 308 entnommen werden. Das Navigationssystem weist ferner einen Teilkettenermittler 202, eine Berechnungseinheit 204 und einen Sortierer 206 auf, die zusammen mit einer Anzeigeeinheit 208 eine Anzeigevorrichtung gemäß der vorliegenden Erfindung bilden und im Betrieb auf den im Speicher 216 abgelegten Routenelementen die entsprechenden, oben beschriebenen Operationen ausführen, so dass die durch die Routenplanungseinheit 306 geplante Route durch die Anzeigeeinheit 208 in entsprechender, im Folgenden beispielhaft für die Daten aus Tabelle 1 erläuterter, hierarchischer Darstellung angezeigt werden kann.

Figur 4 zeigt in vier Stadien 400, 402, 404, 406 einen Bildschirminhalt der Anzeigeeinheit 208, bei der interaktiven Anzeige der Daten aus Tabelle 1, in hierarchischer Darstellung der Attribute der Routenelemente entsprechend ihrer Sortierung in die Folge von Hierarchieebenen gemäß Tabelle 4. Dabei sind zur besseren Erklärbarkeit, wie schon in Tabelle 1, die Attribute der Routenelemente symbolisch durch ihre jeweiligen Bezugszeichen 11-42 ersetzt.

Das Stadium 400 des Bildschirminhalts zeigt die Beispielroute in sehr kompakter Form, in welcher nur die Attribute 21, 11, 23 der höchsten Hierarchieebene sichtbar sind. In derselben Hierarchieebene liegende, identische Attribute benachbarter Routenelemente sind in einem Eintrag zusammengefasst. Um dies zu verdeutlichen, weisen Zahlen am rechten Rand des Bildschirminhalts auf die jeweils in dem davor stehenden Eintrag zusammengefassten Routenelemente hin; sie sind kein Bestandteil des Bildschirminhalts. Sichtbar sind die Straßennummer 21, der Ortsname 11 und die Straßennummer 23, wobei der einzelne Eintrag des Ortsnamens 11 durch Zusammenfassen identischer Attribute aus der höchsten Hierarchieebene der Routenelemente 2-8 gebildet ist. Das an dem vor dem Ortsnamen 11 stehenden Kästchen mit einer ,,+"-Markierung zeigt dem Nutzer an, dass unterhalb dieses Attributs weitere Attribute in niedrigeren Hierarchieebenen vorhanden sind und bei Bedarf mittels des Bedienelements 214 sichtbar gemacht werden können.

Bei Betätigung des Bedienelements 214 wird ein weiteres Stadium 402 des Bildschirminhalts angezeigt. In der zweiten Hierarchieebene, unterhalb des Ortsnamens 11 sind nun die Straßennummern 21 und 22 sichtbar, während sich die "+"-Markierung in eine ,,-"-Markierung verändert hat, um auf den expandierten Zustand des zugehörigen Attributs hinzuweisen. Hierbei zeigen die schwarzen, nach rechts weisenden Dreiecke dem Nutzer wiederum an, dass unterhalb der Straßennummern 21 und 22 weitere Attribute in niedrigeren Hierarchieebenen vorhanden sind und bei Bedarf mittels des Bedienelements 214 sichtbar gemacht werden können. Das sich von dem Kästchen mit der "+"-Markierung in Stadium 400 Erscheinungsbild dieser Dreiecke kennzeichnet zudem die Straßennummern 21 und 22 als streckenbezogene Attribute, im Unterschied zu ortsbezogenen Attributen wie dem Ortsnamen 11 und korreliert mit einer anderen Funktionsweise bei Betätigung des Bedienelements 214, so dass der semantischen Unterschied in einer das Verständnis des Nutzers unterstützenden Weise deutlich wird.

Wählt der Nutzer beispielsweise die Straßennummer 21 in der dritten Zeile des Stadiums 402 und betätigt das Bedienelement 214, so ergibt sich ein Bildschirminhalt wie in Stadium 404. Statt der Straßennummer 21 in der dritten Zeile sind nun die Kreuzungsbezeichnung 41 und darunter die Straßennummer 21 sichtbar, entsprechend den drei Routenelementen 2-4, von denen die letzten beiden aufgrund identischer Attribute in einen Eintrag zusammengefasst sind. Durch das nun nach links weisende Dreieck vor diesen Einträgen wird der Nutzer informiert, dass direkt unterhalb dieser Attribute keine weiteren Attribute mehr vorhanden sind, die sichtbar gemacht werden könnten.

Wählt der Nutzer nun die Straßennummer 22 und betätigt das Bedienelement 214, so ergibt sich ein Bildschirminhalt wie in Stadium 406. Während die Kreuzungsbezeichnungen 41 und 42 jeweils allein angezeigt werden, wird den Straßennamen 31 und 32 die Straßennummer 22 voran gestellt. Dies entspricht einer Sonderregel, gemäß der strecken- und ortsbezogene Attribute nicht in einem einzigen Eintrag der Anzeige kombiniert werden, um ihren semantischen Unterschied nicht zu verwischen. Mehrere streckenbezogene Attribute werden dagegen kombiniert, wodurch zum Ausdruck kommt, dass sie für denselben Streckenabschnitt gültig sind. Die Routenelemente 7-8 erscheinen als Einzeleintrag, da ihre Attribute identisch sind, so dass die Aufteilung des entsprechenden Streckenabschnitts auf die beiden Routenelemente 7 und 8 für den Nutzer ohne Bedeutung ist.

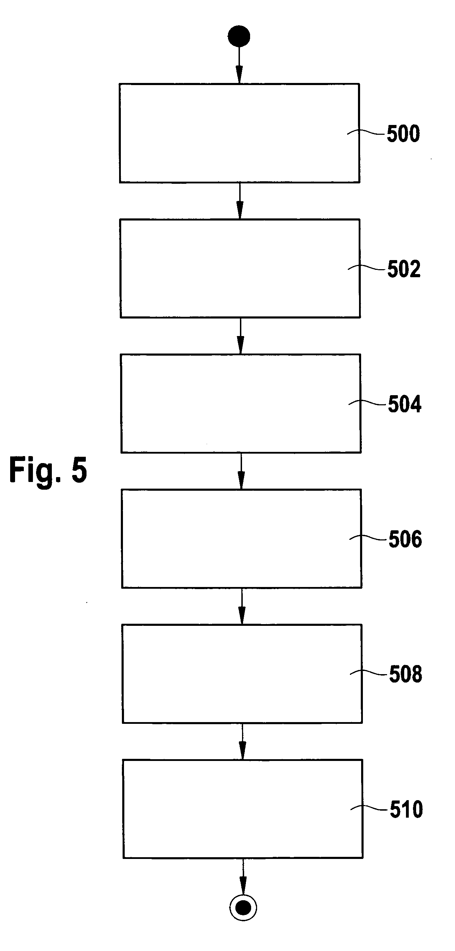

Figur 5 zeigt ein Flussdiagram einer Ausführungsform eines erfindungsgemäßen Verfahrens zum Anzeigen einer Reiseroute, z.B. mit einer Anzeigevorrichtung wie in Fig. 2 dargestellt. In Schritt 500 wird die Reiseroute in Form einer Kette von Routenelementen vorgegeben, wobei jedes Routenelement einen Maßwert und eine Menge von Attributen aufweist. In Schritt 502 wird für jedes Attribut mindestens eines Routenelements, eine zusammenhängende, das Routenelement einschließende Teilkette maximaler Länge von Routenelementen ermittelt, die ein identisches Attribut aufweisen. In Schritt 504 wird für jede Teilkette ein Gesamtmaßwert aus den Maßwerten der Routenelemente der Teilkette berechnet. In Schritt 506 wird, für das mindestens eine Routenelement, die Menge von Attributen nach einer Größenrelation der Gesamtmaßwerte der Teilketten der Attribute in eine Folge von Hierarchieebenen sortiert. In Schritt 508 werden Sonderattribute in der Folge von Hierarchieebenen vorgezogen, und in Schritt 510 werden die Attribute des mindestens einen Routenelements in hierarchischer Darstellung entsprechend den Hierarchieebenen angezeigt.

## Patentansprüche

1. Anzeigevorrichtung (200) zur Anzeige einer Reiseroute, die eine Kette von aneinander anschließenden Routenelementen (1-9) umfasst;
wobei jedes Routenelement eine Menge von Attributen (221-223) aufweist, welche für das Routenelement relevante Zusatzinformationen enthalten;
und wobei die Anzeigevorrichtung einen Sortierer (206) aufweist, der für das mindestens eine Routenelement die Menge von Attributen in eine Folge von Hierarchieebenen sortiert;
und die Anzeigevorrichtung eine Anzeigeeinheit (208) aufweist, die die Attribute des mindestens einen Routenelements in hierarchischer Darstellung entsprechend den Hierarchieebenen anzeigt;
**dadurch gekennzeichnet, dass**
jedes Routenelement (1-9) einen Maßwert (220) für einen jeweiligen Anteil des Routenelements an der Reiseroute aufweist;
die Anzeigevorrichtung (200) einen Teilkettenermittler (202) aufweist, der für jedes Attribut (221-223) mindestens eines Routenelements jeweils eine zusammenhängende, das Routenelement einschließende Teilkette (11, 21-23) maximaler Länge von Routenelementen ermittelt, die ein identisches Attribut aufweisen;
die Anzeigevorrichtung eine Berechnungseinheit (204) aufweist, die für jede Teilkette aus den Maßwerten für die Anteile der Routenelemente der Teilkette an der Reiseroute einen Gesamtmaßwert für die Teilkette berechnet;
und der Sortierer die Menge von Attributen (221-223) nach einer Größenrelation der Gesamtmaßwerte der Teilketten der Attribute in die Folge von Hierrarchieebenen sortiert.

2. Anzeigevorrichtung (200) nach Anspruch 1,
**gekennzeichnet dadurch,**
**dass** der Maßwert (220) eines Routenelements (1-9) eine Funktion einer Wegstrecke und einer Reisezeit des Routenelements (1-9) ist, und insbesondere die Wegstrecke ist.

3. Anzeigevorrichtung (200) nach einem der vorhergehenden Ansprüche,
**gekennzeichnet dadurch,**
**dass** der Gesamtmaßwert einer Teilkette (11, 21-23) die Summe der Maßwerte (220) der Routenelemente der Teilkette (11, 21-23) ist.

4. Anzeigevorrichtung (200) nach einem der vorhergehenden Ansprüche,
**gekennzeichnet dadurch,**
**dass** die Menge von Attributen (221-223) Sonderattribute (223) umfasst, welche gemäß einer vorgebbaren Klassifikation der Attribute besonders relevante Informationen enthalten, und die Anzeigeeinrichtung weiterhin eine Sondervorzieheinheit (210) aufweist, die Sonderattribute (223) in der Folge von Hierarchieebenen vorzieht.

5. Anzeigevorrichtung (200) nach einem der vorhergehenden Ansprüche,
**gekennzeichnet dadurch,**
**dass** die Menge von Attributen (221-223) ortsbezogene Attribute (222) und streckenbezogene Attribute (221) umfasst und die Anzeigevorrichtung weiterhin eine Ortsvorzieheinheit (212) aufweist, die ein ortsbezogenes Attribut (222) in der Folge von Hierarchieebenen vor ein streckenbezogenes Attribut (221) zieht, wenn die Teilkette des streckenbezogenen Attributs (221) ein erstes oder letztes Routenelement aufweist, das zugleich Routenelement der Teilkette des ortsbezogenen Attributs (222) ist.

6. Anzeigevorrichtung (200) nach Anspruch 5,
**gekennzeichnet dadurch,**
**dass** die Anzeigeeinheit (208) innerhalb einer Hierarchieebene übereinstimmende Attribute benachbarter Routenelemente in einem Eintrag zusammenfasst, und ein Bedienelement (214) aufweist, das dem Eintrag nachgeordnete Attribute der nächst niedrigeren Hierarchieebene wahlweise sichtbar macht, wobei insbesondere das Bedienelement (214) dazu ausgebildet ist, nachgeordnete Attribute eines ortsbezogenen Eintrags in Form einer Baumstruktur sichtbar zu machen.

7. Anzeigevorrichtung (200) nach Anspruch 6,
**gekennzeichnet dadurch,**
**dass** das Bedienelement (214) dazu ausgebildet ist, nachgeordnete Attribute eines streckenbezogenen Eintrags durch Ersetzen des Eintrags mit einer Liste von Verkettungen des im Eintrag zusammengefassten streckenbezogenen Attributs (221) mit jeweils einem Eintrag der nächst niedrigeren Hierarchieebene sichtbar zu machen.

8. Navigationssystem (300) zum Navigieren entlang einer Reiseroute, mit einer Anzeigevorrichtung (200) zur Anzeige der Reiseroute nach einem der vorstehenden Ansprüche.

9. Verfahren zum Anzeigen einer Reiseroute, insbesondere mittels einer Anzeigevorrichtung (200) nach einem der Anspruche 1 bis 7, mit den Schritten:
Vorgeben (500) einer Kette von aneinander anschließenden Routenelementen (1-9) der Reiseroute, wobei jedes Routenelement eine Menge von Attributen (221-223) aufweist, welche für das Routenelement relevante Zusatzinformationen enthalten;
für das mindestens eine Routenelement, Sortieren (506) der Menge von Attributen in eine Folge von Hierarchieebenen; und
Anzeigen (510) der Attribute des mindestens einen Routenelements in hierarchischer Darstellung entsprechend den Hierarchieebenen;
**dadurch gekennzeichnet, dass**
jedes Routenelement (1-9) einen Maßwert (220) für einen jeweiligen Anteil des Routenelements an der Reiseroute aufweist;
dass das Verfahren die folgenden Schritte aufweist:
° für jedes Attribut (221-223) mindestens eines Routenelements, Ermitteln (502) einer zusammenhängenden, das Routenelement einschließenden Teilkette (11, 21-23) maximaler Länge von Routenelementen, die ein identisches Attribut aufweisen;
° für jede Teilkette, Berechnen (504) eines Gesamtmaßwerts für die Teilkette aus den Maßwerten für die Anteile der Routenelemente der Teilkette an der Reiseroute;
und dass das Sortieren (506) der Menge von Attributen in eine Folge von Hierarchieebenen nach einer Größenrelation der Gesamtmaßwerte der Teilketten der Attribute erfolgt.

10. Verfahren nach Anspruch 9,
**gekennzeichnet dadurch,**
**dass** der Maßwert (220) eines Routenelements (1-9) eine Wegstrecke des Routenelements (1-9) ist und insbesondere das Berechnen (504) des Gesamtmaßwerts durch Summieren der Wegstrecken der Routenelemente der Teilkette (11, 21-23) erfolgt.

11. Verfahren nach einem der Ansprüche 9 und 10,
**gekennzeichnet dadurch,**
**dass** die Menge von Attributen (221-223) ortsbezogene Attribute (222) und streckenbezogene Attribute (221) umfasst und das Verfahren weiterhin einen Schritt des Vorziehens (508) ortsbezogener Attribute (222) aufweist, wobei ein ortsbezogenes Attribut (222) in der Folge von Hierarchieebenen vor ein streckenbezogenes Attribut (221) gezogen wird, wenn die Teilkette des streckenbezogenen Attributs (221) ein erstes oder letztes Routenelement aufweist, das zugleich Routenelement der Teilkette des ortsbezogenen Attributs (222) ist.

## Claims

1. Display apparatus (200) for displaying a journey route which comprises a chain of successive route elements (1-9);
wherein each route element has a set of attributes (221-223) which contain supplementary information that is relevant to the route element;
and wherein the display apparatus has a sorter (206) which sorts the set of attributes for the at least one route element into a sequence of hierarchy levels;
and the display apparatus has a display unit (208) which displays the attributes of the at least one route element in a hierarchic presentation in line with the hierarchy levels;
**characterized in that**
each route element (1-9) has a dimension value (220) for a respective component of the route element on the journey route;
the display apparatus (200) has a sub-chain ascertainer (202) which ascertains, for each attribute (221-223) of at least one route element, a respective cohesive sub-chain (11, 21-23) - encompassing the route element - of maximum length of route elements which have an identical attribute;
the display apparatus has a calculation unit (204) which calculates, for each sub-chain, a total dimension value for the sub-chain from the dimension values for the components of the route elements of the sub-chain on the journey route;
and the sorter sorts the set of attributes (221-223) into the sequence of hierarchy levels on the basis of a magnitude relationship between the total dimension values of the sub-chains of the attributes.

2. Display apparatus (200) according to Claim 1,
**characterized in that**
the dimension value (220) of a route element (1-9) is a function of a distance and a journey time for the route element (1-9), and in particular is the distance.

3. Display apparatus (200) according to one of the preceding claims,
**characterized in that**
the total dimension value of a sub-chain (11, 21-23) is the sum of the dimension values (220) of the route elements of the sub-chain (11, 21-23).

4. Display apparatus (200) according to one of the preceding claims,
**characterized in that**
the set of attributes (221-223) comprises special attributes (223) which contain particularly relevant information on the basis of a prescribable classification for the attributes, and the display device furthermore has a special preference unit (210) which gives preference to special attributes (223) in the sequence of hierarchy levels.

5. Display apparatus (200) according to one of the preceding claims,
**characterized in that**
the set of attributes (221-223) comprises location-related attributes (222) and section-related attributes (221), and the display apparatus furthermore has a location preference unit (212) which gives preference to a location-related attribute (222) in the sequence of hierarchy levels over a section-related attribute (221) when the sub-chain of the section-related attribute (221) has a first or last route element which is simultaneously a route element of the sub-chain of the location-related attribute (222).

6. Display apparatus (200) according to Claim 5,
**characterized in that**
the display unit (208) combines matching attributes of adjacent route elements within a hierarchy level in one entry, and has an operator control element (214) which renders attributes of the next lowest hierarchy level which are subordinate to the entry selectively visible, wherein, in particular, the operator control element (214) is designed to render subordinate attributes of a location-related entry visible in the form of a tree structure.

7. Display apparatus (200) according to Claim 6,
**characterized in that**
the operator control element (214) is designed to render subordinate attributes of a section-related entry visible by replacing the entry with a list of concatenations of a section-related attribute (221) combined in the entry with the respective entry from the next lowest hierarchy level.

8. Navigation system (300) for navigating along a journey route, having a display apparatus (200) for displaying the journey route according to one of the preceding claims.

9. Method for displaying a journey route, particularly using a display apparatus (200) according to one of Claims 1 to 7, having the following steps:
a chain of successive route elements (1-9) of the journey route is prescribed (500), wherein each route element has a set of attributes (221-223) which contain supplementary information that is relevant to the route element;
the set of attributes is sorted (506) for the at least one route element into a sequence of hierarchy levels; and
the attributes of the at least one route element are displayed (510) in a hierarchic presentation in line with the hierarchy levels;
**characterized in that**
each route element (1-9) has a dimension value (220) for a respective component of the route element on the journey route;
**in that** the method has the following steps:
• for each attribute (221-223) of at least one route element, a cohesive sub-chain (11, 21-23) - encompassing the route element - of maximum length of route elements which have an identical attribute is ascertained (502);
• for each-sub-chain, a total dimension value for the sub-chain is calculated (504) from the dimension values for the components of the route elements of the sub-chain on the journey route;
and **in that** the set of attributes is sorted (506) into a sequence of hierarchy levels on the basis of a magnitude relationship between the total dimension values of the sub-chains of the attributes.

10. Method according to Claim 9,
**characterized in that**
the dimension value (220) of a route element (1-9) is a distance for the route element (1-9) and, in particular, the total dimension value is calculated (504) by summing the distances of the route elements of the sub-chain (11, 21-23).

11. Method according to one of Claims 9 and 10,
**characterized in that**
the set of attributes (221-223) comprises location-related attributes (222) and section-related attributes (221), and the method furthermore has a step of giving preference (508) to location-related attributes (222), wherein a location-related attribute (222) in the sequence of hierarchy levels is given preference over a section-related attribute (221) when the sub-chain of the section-related attribute (221) has a first or last route element which is simultaneously a route element of the sub-chain of the location-related attribute (222).

## Revendications

1. Dispositif d'affichage (200) destiné à afficher un itinéraire de voyage qui comporte une chaîne d'éléments (1-9) d'itinéraire raccordés les uns aux autres,
chaque élément d'itinéraire présentant différents attributs (221-223) qui contiennent des informations supplémentaires pertinentes pour l'élément d'itinéraire,
le dispositif d'affichage présentant un dispositif de tri (206) qui trie en une succession de plans hiérarchiques les différents attributs du ou des éléments d'itinéraire,
le dispositif d'affichage présentant une unité d'affichage (208) qui affiche les attributs du ou des éléments d'itinéraire dans une représentation hiérarchique conformément aux plans hiérarchiques, **caractérisé en ce que**
chaque élément d'itinéraire (1-9) présente une valeur de taille (220) pour une partie respective de l'élément d'itinéraire sur l'itinéraire de voyage,
**en ce que** le dispositif d'affichage (200) présente un dispositif (202) de détermination de parties de chaîne qui détermine pour chaque attribut (221-223) d'au moins un élément d'itinéraire à chaque fois une partie continue de chaîne (11, 21-23), constituée d'éléments d'itinéraire et de longueur maximale, qui inclut l'élément d'itinéraire, lesquels éléments d'itinéraire présentant un attribut identique,
**en ce que** le dispositif d'affichage présente une unité de calcul (204) qui, pour chaque partie de chaîne et à partir des valeurs de taille des parties des éléments d'itinéraire de la partie de chaîne de l'itinéraire de voyage, calcule une valeur de taille totale de la partie de chaîne et
**en ce que** le dispositif de tri trie les différents attributs (221-223) en fonction d'une relation de grandeur des valeurs de taille totale des parties de chaîne des attributs dans la succession des plans hiérarchiques.

2. Dispositif d'affichage (200) selon la revendication 1, **caractérisé en ce que** la valeur de taille (220) d'un élément d'itinéraire (1-9) est une fonction d'une longueur de parcours et d'un temps de parcours de l'élément d'itinéraire (1-9) et est en particulier la longueur du parcours.

3. Dispositif d'affichage (200) selon l'une des revendications précédentes, **caractérisé en ce que** la valeur de taille totale d'une partie de chaîne (11, 21-23) est la somme des valeurs de taille (220) des éléments d'itinéraire de la partie de chaîne (11, 21-23).

4. Dispositif d'affichage (200) selon l'une des revendications précédentes, **caractérisé en ce que** les différents attributs (221-223) comportent des attributs spéciaux (223) qui contiennent des informations particulièrement pertinentes selon une classification prédéterminable des attributs et le dispositif d'affichage présente en outre une unité (210) de préférence spéciale qui attribue une préférence aux attributs spéciaux (223) dans la succession des plans hiérarchiques.

5. Dispositif d'affichage (200) selon l'une des revendications précédentes, **caractérisé en ce que** les différents attributs (221-223) comportent des attributs (222) associés à des sites et des attributs (221) associés à des parcours, et le dispositif d'affichage présente en outre une unité (212) de préférence de sites qui attribue une préférence à un attribut (222) associé à un site par rapport à un attribut (221) associé à un parcours dans la succession des plans hiérarchiques si la partie de chaîne de l'attribut (221) associé à un parcours présente un premier ou un dernier élément d'itinéraire qui est en même temps un élément d'itinéraire de la partie de chaîne de l'attribut (222) associé à un site.

6. Dispositif d'affichage (200) selon la revendication 5, **caractérisé en ce que** l'unité d'affichage (208) rassemble en une entrée des attributs d'éléments d'itinéraire voisins qui se correspondent dans un plan hiérarchique et présente un élément de commande (214) qui rend sélectivement visible l'introduction d'attributs subordonnés du plan hiérarchique immédiatement inférieur, l'élément de commande (214) étant configuré en particulier pour rendre visible sous la forme d'une structure arborescente des attributs subordonnés d'une introduction associée à un site.

7. Dispositif d'affichage (200) selon la revendication 6, **caractérisé en ce que** l'élément de commande (214) est configuré pour rendre visible des attributs subordonnés d'une entrée associée à un parcours par remplacement de l'entrée par une liste de concaténations de l'attribut (221) associé à un parcours et rassemblé dans l'entrée avec chaque fois une entrée du plan hiérarchique immédiatement inférieur.

8. Système de navigation (300) destiné à assurer la navigation le long d'un itinéraire de voyage et présentant un dispositif d'affichage (200) pour afficher l'itinéraire de voyage selon l'une des revendications précédentes.

9. Procédé d'affichage d'un itinéraire de voyage, en particulier au moyen d'un dispositif d'affichage (200) selon l'une des revendications 1 à 7, et présentant les étapes qui consistent à :
définir (500) une chaîne d'éléments d'itinéraire (1-9) raccordés les uns aux autres dans l'itinéraire de voyage, chaque élément d'itinéraire présentant différents attributs (221-223) qui contiennent des informations supplémentaires pertinentes pour l'élément d'itinéraire,
pour le ou les éléments d'itinéraire, trier (506) les différentes attributs dans une succession de plans hiérarchiques et
afficher (510) les attributs du ou des éléments d'itinéraire dans une représentation hiérarchique conformément aux plans hiérarchiques,
**caractérisé en ce que**
chaque élément d'itinéraire (1-9) présente une valeur de taille (220) pour une partie respective de l'élément d'itinéraire sur l'itinéraire de voyage,
et **en ce que** le procédé comprend les étapes suivantes :
- pour chaque attribut (221-223) d'au moins un élément d'itinéraire, déterminer (502) une partie continue de chaîne (11, 21-23), constituée d'éléments d'itinéraire et de longueur maximale, qui inclut l'élément d'itinéraire, lesquels éléments d'itinéraire présentant un attribut identique,
- pour chaque partie de chaîne, calculer (504) une valeur de taille totale de la partie de chaîne à partir des valeurs de taille des parties des éléments d'itinéraire de la partie de chaîne de l'itinéraire de voyage et
**en ce que** le tri (506) des différents attributs en une succession de plans hiérarchiques s'effectue selon une relation de grandeur des valeurs de taille totale des parties de chaîne des attributs.

10. Procédé selon la revendication 9, **caractérisé en ce que** la valeur de taille (220) d'un élément d'itinéraire (1-9) est une longueur de parcours de l'élément d'itinéraire (1-9) et en particulier le calcul (504) de la valeur de taille totale s'effectue par addition des longueurs de parcours des éléments d'itinéraire de la partie de chaîne (11, 21-23).

11. Procédé selon l'une des revendications 9 et 10, **caractérisé en ce que** les différents attributs (221-223) comportent des attributs (222) associés à un site et des attributs (221) associés à un parcours et le procédé présente en outre une étape de préférence (508) d'attributs (222) associés à un site, un attribut (222) associé à un site étant préféré dans la succession de plans hiérarchiques à un attribut (221) associé à un parcours si la partie de chaîne de l'attribut (221) associé à un parcours présente un premier ou un dernier élément d'itinéraire qui est en même temps un élément d'itinéraire de la partie de chaîne de l'attribut (222) associé à un site.
